# EUROPEAN PATENT SPECIFICATION

(11) **EP 1 567 386 B1**
(45) Date of publication and mention of the grant of the patent: **07.06.2006**
(21) Application number: 03772652.8
(22) Date of filing: 13.10.2003
(51) Int. Cl.: B60K 26/04

(54) **DEVICE FOR MANUAL ACCELERATION PROVIDED ABOVE THE STEERING WHEEL**
ÜBER DEM LENKRAD VORGESEHENE VORRICHTUNG ZUR MANUELLEN BESCHLEUNIGUNG
DISPOSITIF DESTINE A UNE ACCELERATION MANUELLE ET PLACE AU-DESSUS DE LA ROUE DIRECTRICE

(30) Priority: 02.12.2002 IT RM20020193 U
(43) Date of publication of application: 31.08.2005
(73) Proprietor: GUIDOSIMPLEX s.n.c. di Giancarlo Venturini e C., I-00166 Roma (IT)
(72) Inventor: VENTURINI, Sandro, 00166 Roma (IT)
(74) Representative: Banchetti, Marina
(86) International application number: PCT/IT2003/000619
(87) International publication number: WO 2004/050412

(56) References cited:
- EP-A- 0 114 673
- EP-A- 0 699 552
- DE-A- 2 615 005
- FR-A- 2 412 437
- US-A- 3 373 628

## Description

The present invention relates to a device for manual acceleration, particularly a device for manual acceleration provided above the steering wheel.

More specifically, the invention concerns a device of the above kind allowing to obtain an optimum manual action acting on a wheel provided above the vehicle steering wheel. DE 2615005 A describes a device according to the pre-characterising portion of claim 1.

The solution suggested according to the present invention provides an acceleration device, comprised of a rotating wheel, concentric with respect to the steering wheel, that, by a force applied on one or more points of its circumference, allows to actuate the acceleration control of the internal-combustion engine (gasoline or diesel) of every kind of vehicle, by a direct mechanical coupiing.

It is therefore specific object of the present invention a device for manual acceleration comprising a rotating wheel element to be provided above the steering wheel and means for the transmission of motion from said wheel element to the accelerator pedal of the vehicle, characterised in that the device provides transmission of the accelerating force outside the steering wheel operating range and in that the means for transmitting the motion are provided outside the steering wheel operating range.

Preferably, according to the invention, said means for transmitting the motion from said wheel element to the acceleration pedal of the vehicle are comprised of mechanical means.

Preferably according to the invention, said mechanical means for the transmission of the motion from said wheel element to the acceleration pedal of the vehicle comprise support means for the wheel element, linear guide means, thrusting guide means, a lengthened thrusting element and the accelerator pedal.

Particularly, according to the invention, said support means of the wheel element can be comprised of an angularly adjustable support bracket.

Preferably, said mechanical means for the transmission of the motion from said wheel element to the acceleration pedal of the vehicle comprise a support bracket, a linear guide, a bracket, a thrusting rod and a coupling to the acceleration pedal.

Still according to the invention, said device comprises coupling means for coupling the device to the vehicle.

Particularly, the coupling means are comprised of an U bolt for coupling with the steering wheel rod and the device according to the invention.

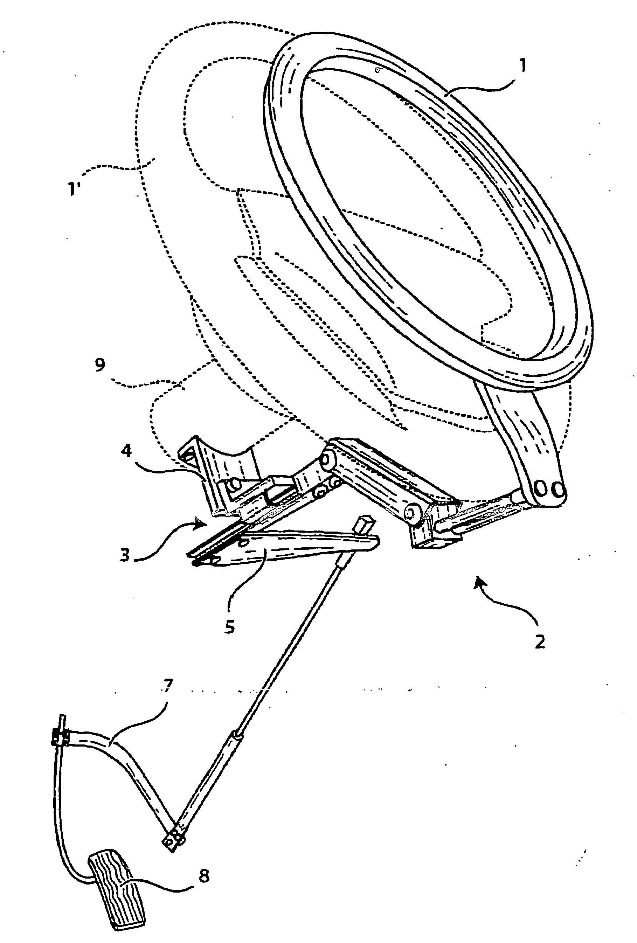

The present invention will be now desaibed, for illustrative but not limitative purposes, according to a preferred embodiment, with particular reference to the figure of the enclosed drawing, wherein it is shown a perspective view of the acceleration device according to the invention.

Making reference to the enclosed drawing, it is shown a device according to the invention, comprised of a rotating wheel 1, concentric with respect to the steering wheel 1', that, by the force applied in one or more points of its circumference, allows to operate the acceleration control of the internal-combustion engine (gasoline or diesel) of each vehicle, by a direct mechanical coupling.

The device according to the invention provides, beside the above-mentioned steering wheel 1', an angularly adjustable support bracket 2, the shape of which can be modified in function of the kind of components of the direction element (steering wheel, column, etc.) and allows in each case to guarantee the perfect operation of the device.

Furthermore, a linear guide 3, a U bolt 4, for coupling between the steering wheel rod 9 and the acceleration device, a thrusting bracket 5, having as well a variable shape in function of the specific needing, are provided.

A thrusting rod 6, for transmitting the motion of the accelerator pedal 8, and a bracket 7 coupling said original accelerator pedal 8 and said thrusting rod are provided between said thrusting bracket 5 and the vehicle accelerator.

Simply exerting a pressure on a point of the acceleration wheel 1, a forward translation (toward the steering wheel 1') is obtained, thus obtaining the transmission of its motion to the acceleration pedal 8, by the kinematic chain suggested in the embodiment shown and comprised of the support bracket 2, of the linear guide 3, of the bracket 5, of the thrusting rod 6 and of the coupling 7 with the pedal 8.

The device according to the invention is further made integral with the steering wheel 1' by the U bolt 4 for coupling with the steering wheel rod 9.

Said wheel 1, installed on the upper part of the original steering wheel 1' and the bracket 2 does not prevent the possible outlet of the airbag provided inside the steering wheel.

It must further pointed out that the U bolt 4 could even not be coupled with the steering wheel rod 9, but with another point of the vehicle by suitable bracket(s).

In any case, transmission of the force occurs outside the steering wheel operating range.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. A device for manual acceleration comprising a rotating wheel element (1) to be provided above the steering wheel (11) and means (2,3,4,5,6,7) for the transmission of motion from said wheel element (1) to the accelerator pedal (8) of the vehicle, **characterised in that** the device provides transmission of the accelerating force outside the steering wheel operating range and **in that** the means (2,3,4,5,6,7) for transmitting the motion are provided outside the steering wheel operating range.

2. Device for manual acceleration according to claim 1, **characterised in that** said means for transmitting the motion from said wheel element to the acceleration pedal of the vehicle are comprised of mechanical means (2, 3, 4, 5, 6, 7).

3. Device for manual acceleration according to each one of the preceding claims, **characterised in that** said mechanical means for the transmission of the motion from said wheel element of the vehicle comprise support means (2) for the wheel element (1), linear guide means (5), thrusting guide means (5), a lengthened thrusting element and the accelerator pedal (8).

4. Device for manual acceleration according to claim 3, **characterised in that** said support means of the wheel element (1) are comprised of an angularly adjustable support bracket (2).

5. . Device for manual acceleration according to claim 3 or 4, **characterised in that** said mechanical means for the transmission of the motion from said wheel element to the acceleration pedal of the vehicle comprise a support bracket (2), a linear guide (3), a bracket (5), a thrusting rod (6) and a coupling (7) to the acceleration pedal (8).

6. A device according to any preceding claim, **characterised in that** it comprises coupling means for coupling the device to the vehicle

7. A device according to claim 6, **characterised in that** the coupling means are comprised of an U bolt for coupling with the steering wheel rod.

## Patentansprüche

1. Vorrichtung zum manuellen Beschleunigen, umfassend ein drehbares Radelement (1), das sich über dem Steuerrad (11) befindet, und Mittel (2,3,4,5,6,7) für die Übertragung der Bewegung von diesem Radelement (1) zum Gaspedal (8) des Fahrzeuges, **dadurch gekennzeichnet, dass** die Vorrichtung eine Kraftübertragung der Beschleunigungskraft außerhalb des Betriebsbereichs des Steuerrades zur Verfügung stellt und dass sich die Mittel (2,3,4,5,6,7) zum Übertragen der Bewegung außerhalb des Betriebsbereichs des Steuerrades befinden.

2. Vorrichtung zum manuellen Beschleunigen gemäß Anspruch 1, **dadurch gekennzeichnet, dass** diese Mittel zum Übertragen der Bewegung von diesem Radelement zum Gaspedal des Fahrzeuges mechanische Mittel (2,3,4,5,6,7) umfassen.

3. Vorrichtung zum manuellen Beschleunigen gemäß einem der vorhergehenden Ansprüche, **dadurch gekennzeichnet, dass** diese mechanischen Mittel für die Übertragung der Bewegung von diesem Radelement des Fahrzeuges Tragemittel (2) für das Radelement (1), lineare Führungsmittel (5), Schubführungsmittel (5), ein verlängertes Schubelement und das Gaspedal (8) umfassen.

4. Vorrichtung zum manuellen Beschleunigen gemäß Anspruch 3, **dadurch gekennzeichnet, dass** diese Tragemittel des Radelementes (1) eine winklig verstellbare Tragknagge (2) umfassen.

5. Vorrichtung zum manuellen Beschleunigen gemäß Anspruch 3 oder 4, **dadurch gekennzeichnet, dass** diese mechanischen Mittel für die Übertragung der Bewegung von diesem Radelement zum Gaspedal des Fahrzeuges eine Tragknagge (2), eine lineare Führung (3), einen Tragarm (5), eine Schubstange (6) und eine Kupplung (7) zum Gaspedal (8) umfassen.

6. Vorrichtung gemäß einem der vorhergehenden Ansprüche, **dadurch gekennzeichnet, dass** die Vorrichtung Kupplungsmittel zum Koppeln der Vorrichtung an das Fahrzeug umfasst.

7. Vorrichtung gemäß Anspruch 6, **dadurch gekennzeichnet, dass** die Kupplungsmittel einen U-Bolzen zum Koppeln mit der Lenkradstange umfassen.

## Revendications

1. Dispositif destiné à une accélération manuelle comprenant un élément de roue (1) rotatif devant être monté au-dessus de la roue directrice (11) et des moyens (2, 3, 4, 5, 6, 7) pour la transmission d'un mouvement à partir dudit élément de roue (1) vers la pédale d'accélérateur (8) du véhicule, **caractérisé en ce que** le dispositif assure une transmission de la force d'accélération à l'extérieur du rayon d'action de la roue directrice, et **en ce que** les moyens (2, 3, 4, 5, 6, 7) destinés à transmettre le mouvement sont prévus à l'extérieur du rayon d'action de la roue directrice.

2. Dispositif destiné à une accélération manuelle selon la revendication 1, **caractérisé en ce que** lesdits moyens destinés à transmettre le mouvement à partir dudit élément de roue vers la pédale d'accélération du véhicule sont constitués de moyens mécaniques (2, 3, 4, 5, 6, 7).

3. Dispositif destiné à une accélération manuelle selon l'une quelconque des revendications précédentes, **caractérisé en ce que** lesdits moyens mécaniques pour la transmission du mouvement à partir dudit élément de roue du véhicule comprennent des moyens de support (2) pour l'élément de roue (1), des moyens de guidage linéaire (5), des moyens de guidage de poussée (5), un élément allongé de poussée et la pédale d'accélérateur (8).

4. Dispositif destiné à une accélération manuelle selon la revendication 3, **caractérisé en ce que** lesdits moyens de support de l'élément de roue (1) sont constitués d'un palier de support (2) ajustable de manière angulaire.

5. Dispositif destiné à une accélération manuelle selon la revendication 3 ou 4, **caractérisé en ce que** lesdits moyens mécaniques pour la transmission du mouvement à partir dudit élément de roue vers la pédale d'accélération du véhicule comprennent un palier de support (2), un guide linéaire (3), un palier (5), une tige de poussée (6) et un couplage (7) pour la pédale d'accélération (8).

6. Dispositif selon l'une quelconque des revendications précédentes, **caractérisé en ce qu'**il comprend des moyens de couplage pour coupler le dispositif au véhicule.

7. Dispositif selon la revendication 6, **caractérisé en ce que** les moyens de couplage sont constitués d'un boulon en U pour un couplage avec la tige de la roue directrice.
